# FASCICULE DE BREVET EUROPEEN

(11) **EP 0 546 893 B1**
(45) Date de publication et mention de la délivrance du brevet: **14.08.1996**
(21) Numéro de dépôt: 92403254.3
(22) Date de dépôt: 02.12.1992
(51) Int. Cl.: F16L 21/06, F23J 13/04

(54) **Segment à double emboitement pour conduit de fumée**
Abgasleitungssegment mit Doppelsteckmuffe
Segment/exhaust fume conduit with double push-in sleeve

(30) Priorité: 13.12.1991 FR 9115511
(43) Date de publication de la demande: 16.06.1993
(73) Titulaire: Urion, Daniel, F-75018 Paris (FR)
(72) Inventeur: Urion, Daniel, F-75018 Paris (FR)

(56) Documents cités:
- EP-A- 0 427 598
- DE-A- 3 509 774
- FR-A- 2 565 327
- FR-E- 83 650

## Description

La présente invention concerne un segment de conduit de fumée de cheminée préfabriqué, comportant respectivement à chacune de ses extrémités un embout mâle et un embout femelle, l'embout mâle d'un segment étant apte à être assemblé par emboîtement dans un embout femelle d'un autre segment.

Elle se rapporte indifféremment à un segment formé par une simple ou une double paroi cylindrique.

Différents segments de ce type existent actuellement sur le marché et se distinguent essentiellement les uns des autres par les moyens d'emboitement mis en oeuvre pour assurer leur liaison lors du montage et également leur étanchéité.

C'est ainsi qu'il existe des segments dits à simple emboitement, par exemple DE-A-3 509 774, dont l'extrémité de l'embout mâle subit un moletage périphérique externe de manière à retreindre son diamètre pour permettre son emmanchement à l'intérieur de l'extrémité d'un embout femelle d'un autre segment de même diamètre. La zone d'emboitement moletée d'un tel embout mâle est limitée axialement par un jonc annulaire, réalisé en saillie vers l'extérieur dudit embout mâle et ayant pour rôle de rigidifier radialement celui-ci tout en offrant une butée axiale à l'embout femelle d'un segment successif.

On comprend aisément qu'un conduit de fumée ainsi réalisé ne pourrait convenir à des installations de hauteur importante, car la mise bout à bout des segments ne pourrait être assurée de manière linéaire.

En effet, de tels emboitements offrent une mauvaise résistance au flambage au droit des parties en contact et de plus, constituent des points faibles facilement désemboitables.

Egalement, l'étanchéité du conduit n'est pas assurée parfaitement.

Pour remédier à ces inconvénients, il est connu de réaliser à l'extrémité de l'embout femelle un évasement vers l'extérieur, de portée tronc-conique, sur laquelle prend appui un jonc annulaire de l'embout mâle. Ultérieurement, un collier d'étanchéité et de serrage est disposé au droit de la zone d'emboitement. Ce collier dont le profil correspond sensiblement à celui du jonc est apte à enserrer au montage ce dernier ainsi que l'évasement tronc-conique de l'embout femelle sur lequel il prend appui.

Néanmoins, bien qu'apportant une amélioration au type d'emboitement précédent, ce dernier système n'apporte pas toutes les garanties recherchées et c'est pour cette raison qu'il a été proposé sur le marché des segments pour conduit de fumée, à double emboitement.

Un système connu de ce type décrit dans le Certificat d'Utilité n° 2 565 327 consiste, à partir d'un segment à simple emboitement, à disposer d'un manchon, rapporté préalablement sur l'embout mâle et comportant une zone expansée de portée cylindrique, de manière à définir un espace annulaire entre celle-ci et l'embout mâle sur lequel il est monté, espace annulaire dans lequel est susceptible de se loger l'embout femelle. Celui-ci est ainsi en contact intérieur avec l'embout mâle pour un premier emboitement et en contact extérieur avec la partie cylindrique de la zone expansée du manchon pour un second emboitement. Comme précédemment, un collier de serrage englobe la zone d'emboitement.

Un tel dispositif a apporté une solution aux problèmes cités précédemment mais en a créé un autre par la complexité des éléments à mettre en oeuvre et plus particulièrement, en ce qui concerne le manchon rapporté qui constitue une pièce à réaliser séparément des segments, ce qui implique également une manutention et un stockage supplémentaire, se traduisant par un surcoût global à tous les niveaux.

La présente invention vise à remédier à ces inconvénients, et à apporter divers avantages, consistant essentiellement à obtenir un segment emboitable les uns par rapport aux autres de manière rigide et étanche, par double emboitement, sans pièce intermédiaire, hormis le collier de fixation, et offrant en outre l'avantage de pouvoir permettre l'utilisation d'un matériau de réalisation du segment, de plus faible épaisseur. Cela se traduit également par une diminution du prix de revient, particulièrement sensible lorsqu'il s'agit d'acier inoxydable.

A cet effet, le segment de conduit de fumée apte à être assemblé par double emboitement à un autre segment ou élément de cheminée, et du type à simple paroi, se caractérise en ce que l'embout femelle comporte une première zone expansée de portée cylindrique, apte à permettre un premier emboitement d'une partie d'extrémité correspondante de l'embout mâle, ladite zone expansée étant évasée vers l'extérieur par un contre-coudage formant un épaulement se terminant par une seconde zone, de portée cylindrique coaxiale à la première, et apte à permettre un second emboitement d'une partie expansée correspondante d'un jonc annulaire, réalisée en saillie vers l'extérieur sur l'embout mâle et raccordée à la partie d'extrémité de celui-ci par un contre-coudage formant une prise d'appui sur l'épaulement correspondant de l'embout femelle.

D'autres caractéristiques et avantages de l'invention apparaîtront clairement à la lecture de la description qui va suivre, donnée à titre d'exemple non limitatif, en se référant aux dessins annexés, dans lesquels:

La figure 1 représente un segment à simple paroi et à double emboitement, en demi-coupe axiale et en demi-vue en élévation.

La figure 2 représente un segment à double paroi et à double emboitement en demi coupe axiale.

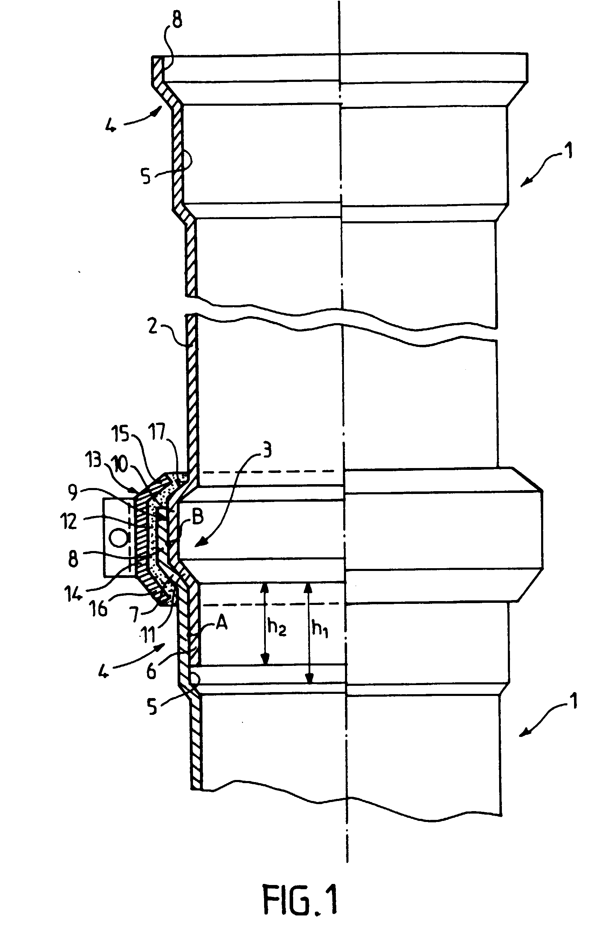

Le segment 1 illustré sur la figure 1 est destiné à la réalisation de conduits de fumée pour foyers ouverts ou fermés, ou encore pour chaudières polycombustibles par assemblage bout à bout des segments, tels que celui décrit ci-dessous en référence à la figure 1.

Selon un premier exemple de réalisation, chaque segment 1 est constitué par une simple paroi 2, en tôle métallique sensiblement conformée en tronc de cylindre de section circulaire et agrafée ou soudée le long d'une génératrice.

Un tel segment comporte, dans le sens représenté sur la figure, c'est-à-dire vers le bas, un embout mâle 3 à sa partie inférieure et un embout femelle 4 à sa partie supérieure, l'embout mâle 3 d'un segment 1 étant apte à être assemblé par double emboitement dans un embout femelle 4 d'un autre segment 1A.

Selon l'invention, l'embout femelle 4 comporte une première zone expansée de portée cylindrique 5, apte à permettre un premier emboitement A d'une partie d'extrémité correspondante 6 de l'embout mâle 3, ladite zone expansée 5 étant évasée vers l'extérieur par un contre-coudage formant un épaulement 7 pour obtenir une seconde zone 8, également de portée cylindrique, coaxiale à la première 5, et apte à permettre un second emboitement B d'une partie expansée correspondante 9 d'un jonc annulaire 10, réalisée en saillie vers l'extérieur sur l'embout mâle 3 et raccordée à la partie d'extrémité 6 de celui-ci 3 par un contre-coudage formant une prise d'appui 11 sur l'épaulement 7 correspondant de l'embout femelle 4.

Dans le présent exemple de réalisation l'épaulement 7 reliant les deux zones d'emboitement coaxiales 5, 8 de portée cylindrique de l'embout femelle 4 est de portée sensiblement tronconique.

Il est à noter que dans la pratique, il s'est avéré plus simple de réaliser un épaulement 7 de portée sensiblement sphérique. Ceci est dû aux faibles dimensions du contre-coudage.

Le diamètre intérieur de la première zone d'emboitement 5 de l'embout femelle 4 est sensiblement identique, au jeu de coulissement près, au diamètre extérieur de l'extrémité d'emboitement correspondante 6 de l'embout mâle 3.

De cette manière, la section interne du conduit obtenu par une succession de segments est constante, même dans la zone d'emboitement.

Afin que la prise d'appui 11 du jonc 10 de l'embout mâle 3 puisse venir en contact sur l'épaulement 7 de l'embout femelle 4, à l'exclusion de tout autre appui axial risquant de compromettre la prise d'appui d'où l'étanchéité à cet endroit, la hauteur "h1" de la première zone d'emboitement 5 de l'embout femelle 4 est supérieure à la hauteur "h2" de l'extrémité correspondante 6 de l'embout mâle 3.

De manière à parfaire la rigidité de l'ensemble ainsi composé et son étanchéité, un collier de fixation 13 de deux segments emboités 1, comporte d'une part une portée cylindrique 14, coaxiale auxdits segments 1, et agissant radialement en serrage extérieurement sur le second emboitement B et d'autre part, des coupelles périphériques supérieure 15 et inférieure 16 coopérant respectivement avec une partie découverte 17 du jonc 10 de l'embout mâle 3 et l'épaulement 7 de l'embout femelle 4 pour assurer la liaison rigide axiale des segments, emboités 1, et leur étanchéité.

Enfin, comme évoqué précédemment, un joint d'étanchéité 12 composé d'un matériau compressible est interposé annulairement entre le collier de fixation 13 et les parois externes des segments emboités 1, dans la zone du second emboitement B.

Il est à noter que le joint peut être également disposé entre l'épaulement 7 et la prise d'appui 11.

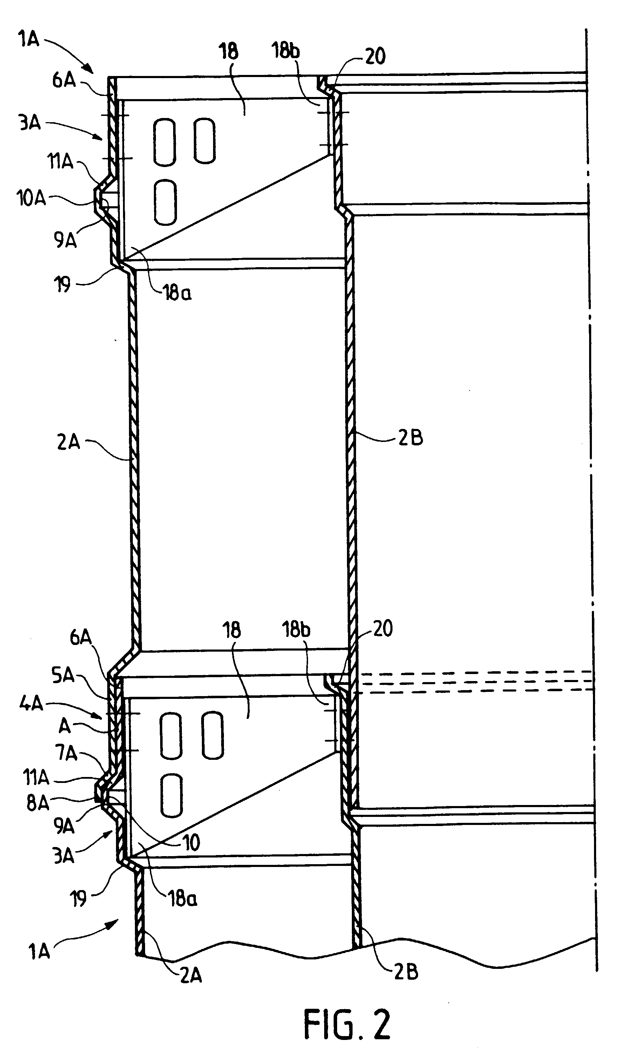

La figure 2 montre un second exemple de réalisation.

A noter que les repères 1 à 11 du premier mode de réalisation décrit ci-dessus désignent des éléments identiques 1A à 11A représentés sur la figure 2 et qui ne seront pas décrits à nouveau.

Il en est de même pour le collier de fixation 13, non représenté dans le second mode de réalisation, car identique.

Le segment 1A diffère essentiellement du précédent en ce qu'il comporte deux parois, dont une externe 2, 2A et une autre interne 2B formant des cylindres sensiblement coaxiaux, positionnés l'un par rapport à l'autre par des entretoises formant pontets 18 entre lesdites parois interne et externe.

Un segment de ce type a précédemment été décrit dans la demande de brevet français n° 89 14 516 par le demandeur et par conséquent, ne sera pas décrit à nouveau en détail.

Il est cependant à noter selon une caractéristique de la présente invention que les pontets 18 sont positionnés à l'intérieur de l'embout mâle 3A, en appui d'une part par sa partie inférieure externe 18a, sur un épaulement interne 19 de la paroi externe 2A, du segment 1A et d'autre part par sa partie supérieure interne 18b sur un épaulement externe 20 réalisé à proximité de l'extrémité de la paroi interne 2B du même segment 1A.

## Revendications

1. Segment (1, 1A) de conduit de fumée préfabriqué, formé par au moins une paroi cylindrique (2, 2A) et comportant respectivement à chacune de ses extrémités un embout mâle (3, 3A) et un embout femelle (4, 4A), l'embout mâle (3, 3A) d'un segment (1, 1A) étant apte à être assemblé par double emboitement dans un embout femelle (4, 4A) d'un autre segment (1, 1A), caractérisé en ce que l'embout femelle (4, 4A) comporte une première zone expansée de portée cylindrique (5, 5A), apte à permettre un premier emboitement (A) d'une partie d'extrémité correspondante (6, 6A) de l'embout mâle (3, 3A), ladite zone expansée (5, 5A) étant évasée vers l'extérieur par un contre-coudage formant un épaulement (7, 7A) se terminant par une seconde zone (8, 8A), de portée cylindrique coaxiale à la première (5, 5A), et apte à permettre un second emboitement (B) d'une partie expansée correspondante (9, 9A) d'un jonc annulaire (10, 10A), réalisée en saillie vers l'extérieur sur l'embout mâle (3, 3A) et raccordée à la partie d'extrémité (6, 6A) de celui-ci (3, 3A) par un contre-coudage formant une prise d'appui (11, 11A) sur l'épaulement (7, 7A) correspondant de l'embout femelle (4, 4A).

2. Segment selon la revendication 1, caractérisé en ce que l'épaulement (7, 7A) reliant les deux zones d'emboitement (5, 5A 8, 8A) de portée coaxiales de l'embout femelle (4, 4A) est de portée sensiblement tronconique.

3. Segment selon la revendication 1, caractérisé en ce que l'épaulement (7, 7A) reliant les deux zones d'emboitement (5, 5A 8, 8A) de portée coaxiales de l'embout femelle (4, 4A) est de portée sensiblement sphérique.

4. Segment selon la revendication 1, caractérisé en ce que la hauteur "h1 " de la première zone d'emboitement (5, 5A) de l'embout femelle (4, 4A) est supérieure à la hauteur "h2" de l'extrémité d'emboitement correspondante (6, 6A) de l'embout mâle (3, 3A) de manière à permettre la prise d'appui (11, 11A) du jonc (10, 10A) de l'embout mâle (3, 3A) sur l'épaulement (7, 7A) de l'embout femelle (4, 4A) à l'exclusion de tout autre appui axial.

5. Segment selon l'une des revendications précédentes, caractérisé en ce qu'un collier de fixation (13) de deux segments emboités (1, 1A), comporte d'une part une portée cylindrique, coaxiale auxdits segments (1, 1A) et agissant radialement en serrage extérieurement sur le second emboitement (B) et d'autre part, des coupelles périphériques inférieure (15) et supérieure (16) coopérant respectivement avec une partie découverte (17) du jonc (10, 10A) de l'embout mâle (3, 3A) et l'épaulement (7, 7A) de l'embout femelle (4, 4A) pour assurer la liaison rigide axiale des segments, emboités (1, 1A) et leur étanchéité.

6. Segment selon la revendication 5, caractérisé en ce qu'un joint d'étanchéité (12) composé d'un matériau compressible est interposé annulairement entre le collier de fixation (13) et les parois externes des segments emboités (1, 1A) dans le zone du second emboitement (B).

7. Segment selon la revendication 5, caractérisé en ce qu'un joint d'étanchéité (12) composé d'un matériau compressible est interposé entre l'épaulement (7, 7A) et la prise d'appui (11, 11A).

8. Segment selon l'une des revendications précédentes, caractérisé en ce qu'il est formé par une simple paroi cylindrique (2, 2A).

9. Segment selon l'une des revendications 1 à 7, caractérisé en ce qu'il comporte deux parois, dont une externe (2, 2A) et une autre interne (2B) formant des cylindres sensiblement coaxiaux, positionnés l'un par rapport à l'autre par des entretoises formant pontets (18) entre lesdites parois interne et externe.

10. Segment selon la revendication 9, caractérisé en ce les pontets (18) sont positionnés à l'intérieur de l'embout mâle (3A), en appui d'une part par sa partie inférieure externe (18a), sur un épaulement interne (19) de la paroi externe (2A), du segment (1A) et d'autre part par sa partie supérieure interne (18b) sur un épaulement externe (20) réalisé à proximité de l'extrémité de la paroi interne (2B) du même segment (1A).

## Patentansprüche

1. Vorgefertigtes Abgasleitungssegment (1, 1A), das durch zumindest eine zylindrische Wand (2, 2A) gebildet ist und jeweils an jedem seiner Enden einen männlichen Ansatz (3, 3A) und einen weiblichen Ansatz (4, 4A) aufweist, wobei der männliche Ansatz (3, 3A) eines Segments (1, 1A) dazu geeignet ist, durch eine Doppelsteckmuffe in einen weiblichen Ansatz (4, 4A) eines anderen Segmentes (1, 1A) montiert zu werden, dadurch gekennzeichnet, daß der weibliche Ansatz (4, 4A) einen ersten ausgedehnten Bereich (5, 5A) von zylindrischem Umfang aufweist, der dazu geeignet ist, eine erste Einfügung (A) eines Abschnittes eines entsprechenden Endes (6, 6A) des männlichen Ansatzes (3, 3A) zu erlauben, wobei der ausgedehnte Bereich (5, 5A) in Richtung nach außen durch eine Gegenverkröpfung aufgeweitet ist, die eine Schulter (7, 7A) bildet, die in einem zweiten Bereich (8, 8A) mit zylindrischem Umfang endet, der koaxial zu dem ersten (5, 5A) ist und dazu geeignet ist, eine zweite Einfügung (B) eines entsprechenden ausgedehnten Abschnittes (9, 9A) eines ringförmigen Sprengringes (10, 10A) zu erlauben, der vorstehend in Richtung nach außen auf dem männlichen Ansatz (3, 3A) ausgeführt ist und mit dem Abschnitt des Endes (6, 6A) desselben (3, 3A) durch eine Gegenverkröpfung verbunden ist, die eine Abstützung (11, 11A) auf der Schulter (7, 7A) entsprechend dem weiblichen Ansatz (4, 4A) bildet.

2. Segment gemäß Anspruch 1, dadurch gekennzeichnet, daß die Schulter (7, 7A), die die beiden Einfügungsbereiche (5, 5A, 8, 8A) mit koaxialen Umfängen des weiblichen Ansatzes (4, 4A) verbinden, von im wesentlichen kegelstumpfförmiger Form ist.

3. Segment gemäß Anspruch 1, dadurch gekennzeichnet, daß die Schulter (7, 7A), die die beiden Einfügungsbereiche (5, 5A, 8, 8A) mit koaxialen Umfangen des weiblichen Ansatzes (4, 4A) verbinden, von im wesentlichen sphärischer Form ist.

4. Segment gemäß Anspruch 1, dadurch gekennzeichnet, daß die Höhe "h1" des ersten Einfügungsbereiches (5, 5A) des weiblichen Ansatzes (4, 4A) größer als die Höhe "h2" des entsprechenden Einfügungsendes (6, 6A) des männlichen Ansatzes (3, 3A) ist, um so die Abstützung (11, 11A) des Sprengringes (10, 10A) des männlichen Ansatzes (3, 3A) auf der Schulter (7, 7A) des weiblichen Ansatzes (4, 4A) zu erlauben, wobei jede andere axiale Abstützung ausgeschlossen ist.

5. Segment gemäß einem der vorangehenden Ansprüche, dadurch gekennzeichnet, daß ein Befestigungskragen (13) der beiden eingefügten Segmente (1, 1A) zum einen einen zylindrischen Umfang, der koaxial zu den Segmenten (1, 1A) ist und radial in äußerer Verspannung auf die zweite Einfügung (B) wirkt, und zum anderen die peripheren unteren (15) und oberen (16) Schalen aufweist, die jeweils mit einem freigelegten Abschnitt (17) des Sprengringes (10, 10A) des männlichen Ansatzes (3, 3A) und der Schulter (7, 7A) des weiblichen Ansatzes (4, 4A) zusammenwirken, um die axiale steife Verbindung der eingefügten Segmente (1, 1A) und ihre Dichtheit zu gewährleisten.

6. Segment gemäß Anspruch 5, dadurch gekennzeichnet, daß ein Dichtungsring (12), der aus einem komprimierbaren Material besteht, ringförmig zwischen den Befestigungskragen (13) und die äußeren Wände der eingefügten Segmente (1, 1A) in dem Bereich der zweiten Einfügung (B) zwischengelegt ist.

7. Segment gemäß Anspruch 5, dadurch gekennzeichnet, daß ein Dichtungsring (12), der aus einem komprimierbaren Material besteht, zwischen die Schulter (7, 7A) und die Abstützung (11, 11A) zwischengelegt ist.

8. Segment gemäß einem der vorangehenden Ansprüche, dadurch gekennzeichnet, daß es durch eine einfach zylindrische Wand (2, 2A) gebildet ist.

9. Segment gemäß einem der Ansprüche 1 bis 7, dadurch gekennzeichnet, daß es zwei Wände aufweist, wobei eine äußere (2, 2A) und eine andere innere (2, 2B) im wesentlichen koaxiale Zylinder bilden, die bezüglich einander durch Stege positioniert sind, die Bügel (18) zwischen den inneren und äußeren Wänden bilden.

10. Segment gemäß Anspruch 9, dadurch gekennzeichnet, daß die Bügel (18) am Inneren des männlichen Ansatzes (3A) in Abstützung zum einen durch ihren unteren äußeren Abschnitt (18a) auf einer inneren Schulter (19) der äußeren Wand (2A) des Segmentes (1A) und zum anderen durch ihren oberen inneren Abschnitt (18b) auf einer äußeren Schulter (20), die in der Nähe des Endes der inneren Wand (2B) des gleichen Segmentes (1A) ausgeführt ist, positioniert sind .

## Claims

1. A segment (1, 1A) of a prefabricated smoke conduit formed by at least one cylindrical wall (2, 2A) and comprising respectively at each of its ends a male connecting portion (3, 3A) and a female socket (4, 4A), the male connecting portion (3, 3A) of one segment being adapted to be fitted by double nesting in a female socket (4, 4A) of another segment (1, 1A), characterized in that the female socket (4, 4A) comprises a first widened cylindrical bearing zone (5, 5A) adapted to allow a first nesting (A) of a corresponding end part (6, 6A) of the male connecting portion (3, 3A), the said widened zone (5, 5A) being widened outwards by an elbowed bend forming a shoulder (7, 7A) ended by a second zone (8, 8A) of cylindrical bearing coaxial to the first (5, 5A), and adapted to allow a second nesting (B) of a corresponding widened part (9, 9A) of an annular retention ring (10, 10A) formed projecting outwards on the male connecting portion (3, 3A) and connected to the end part (6, 6A) of the latter (3, 3A) by an elbowed bend forming a bearing surface (11, 11A) on the corresponding shoulder (7, 7A) of the female socket (4, 4A).

2. A segment according to claim 1, characterized in that the shoulder (7, 7A) connecting the two nesting zones (5, 5A and 8, 8A) of the coaxial bearing surface of the female socket (4, 4A) is substantially a tapered bearing.

3. A segment according to claim 1, characterized in that the shoulder (7, 7A) connecting the two nesting zones (5, 5A and 8, 8A) of the coaxial bearing surface of the female socket (4, 4A) is substantially a spherical bearing.

4. A segment according to claim 1, characterized in that the height "h1" of the first nesting zone (5, 5A) of the female socket (4, 4A) is greater than the height "h2" of the corresponding nesting end (6, 6A) of the male connecting portion (3, 3A) so that it allows the bearing (11, 11A) of the retention ring (10, 10A) of the male connecting portion (3, 3A) on the shoulder (7, 7A) of the female socket (4, 4A) to the exclusion of any other axial bearing.

5. A segment according to any one of the preceding claims, characterized in that a collar (13) for fixing the two nested segments (1, 1A) comprises, on the one hand, a cylindrical bearing surface coaxial to the said segments (1, 1A) and acting radially as an external clamp on the second nesting region (B) and, on the other hand, lower (15) and upper (16) peripheral dished caps cooperating respectively with an exposed portion (17) of the retention ring (10, 10A) of the male connecting portion (3, 3A) and the shoulder (7, 7A) of the female socket (4, 4A) to ensure the rigid axial connection and sealing of the nested segments (1, 1A).

6. A segment according to claim 5, characterized in that a sealing joint (12) composed of a compressible material is interposed annularly between the fixing collar (13) and the external walls of the nested segments (1, 1A) in the second nesting zone (B).

7. A segment according to claim 5, characterized in that a sealing joint (12) composed of a compressible material is interposed between the shoulder (7, 7A) and the bearing surface (11, 11A).

8. A segment according to any one of the preceding claims, characterized in that it is formed by a simple cylindrical wall (2, 2A).

9. A segment according to any one of claims 1 to 7, characterized in that it comprises two walls, one of which is external (2, 2A) and the other internal (2B) forming substantially coaxial cylinders positioned relative to one another by spacers forming connecting bridges (18) between the said internal and external walls.

10. A segment according to claim 9, characterized in that the said connecting bridges (18) are located inside the male connecting portion (3, 3A) bearing, on the one hand, by their lower external part (18a) on an internal shoulder (19) of the external wall (2A) of the segment (1A) and, on the other hand, by their upper internal part (18b) on an external shoulder (20) formed near the end of the internal wall (2B) of the same segment (1A).
